# EUROPEAN PATENT APPLICATION

(11) **EP 4 586 106 A1**
(43) Date of publication of application: **16.07.2025**
(21) Application number: 23870508.1
(22) Date of filing: 20.09.2023
(51) Int. Cl.: G06F 16/78

(54) **VIDEO TAG DETERMINATION METHOD AND APPARATUS, DEVICE AND MEDIUM**

(30) Priority: 30.09.2022 CN 202211216791
(71) Applicant: Huawei Technologies Co., Ltd., Shenzhen, Guangdong 518129 (CN)
(72) Inventor: LI, Weimian, Shenzhen, Guangdong 518129 (CN); PEI, Renjing, Shenzhen, Guangdong 518129 (CN); XU, Songcen, Shenzhen, Guangdong 518129 (CN)
(74) Representative: Pfenning, Meinig & Partner mbB
(86) International application number: PCT/CN2023/119922
(87) International publication number: WO 2024/067276

(57) **Abstract**

Embodiments of the present disclosure provide a method and an apparatus for determining a tag of a video, and a device, and relate to the field of artificial intelligence. In the method for determining a tag of a video in the present disclosure, a keyword library for labeling a video is first constructed based on text information of a plurality of videos. Video information of a to-be-labeled target video is determined, where the video information includes at least text information of the target video. Then, a video feature of the target video is determined based on the text information of the target video. Then, at least one keyword is determined from the keyword library as a tag of the target video based on the video feature. In this way, the target video is automatically labeled by using keywords mined from the plurality of videos, so that manual labeling is not needed, and labeling efficiency and accuracy are improved.

## Description

This application claims priority to Chinese Patent Application No. 202211216791.2, filed with the China National Intellectual Property Administration on September 30, 2022 and entitled "METHOD AND APPARATUS FOR DETERMINING TAG OF VIDEO, DEVICE, AND MEDIUM", which is incorporated herein by reference in its entirety.

### TECHNICAL FIELD

Embodiments of the present disclosure mainly relate to the field of artificial intelligence, and more specifically, to a method and an apparatus for determining a tag of a video, a device, and a medium.

### BACKGROUND

Video tags are a set of keywords used to label videos. Good tags may allow videos to be distributed more accurately, and increase a probability that the videos are searched and displayed, thereby gaining more impression. In fields such as video recommendation, video search, and video delivery, video tags determine accuracy of these applications. For example, in the field of video recommendation, videos may be effectively recommended to users based on video tags, and in the field of video search, video tags may directly determine accuracy of a search result. With development of various video platforms and short videos, massive videos are flooded on the internet. How to efficiently and accurately label these videos becomes a problem that needs to be resolved.

### SUMMARY

Embodiments of the present disclosure provide a solution for determining a tag of a video.

According to a first aspect of the present disclosure, a method for determining a tag of a video is provided. The method includes: constructing, based on text information of a plurality of videos, a keyword library for labeling a video; determining video information of a to-be-labeled target video, where the video information includes at least text information of the target video; determining a video feature of the target video based on the text information of the target video; and determining, based on the video feature, at least one keyword from the keyword library as a tag of the target video. According to this embodiment of the present disclosure, the target video is automatically labeled by using keywords mined from the plurality of videos, so that manual labeling is not needed, and labeling efficiency and accuracy are improved.

In an implementation of the first aspect, the constructing, based on text information of a plurality of videos, a keyword library for labeling a video includes: obtaining the plurality of videos through the internet; extracting first text information of a first video in the plurality of videos; and constructing the keyword library based on at least the first text information. In this manner, the keyword library may be constructed by using information in the videos scraped from the internet, so that the keywords in the word library are highly correlated with the videos and have timeliness, thereby providing a basis for subsequent tag determining.

In another implementation of the first aspect, the constructing the keyword library based on at least the first text information and audio information includes: converting the audio information into second text information; parsing the first text information and the second text information, to determine a segment in the text information; and constructing the keyword library based on the segment. In this manner, the keyword library may be constructed by mining various information in the video, so that types of the keywords in the word library are rich, and subsequent more accurate tag matching is implemented.

In still another implementation of the first aspect, the constructing the keyword library based on the segment includes: extracting a keyword in the segment; determining a frequency at which each extracted keyword appears in a plurality of keywords of the plurality of videos; determining a group of initial keywords from the plurality of keywords, where the frequency of each keyword in the group of initial keywords is greater than a first threshold frequency and less than a second threshold frequency; and storing the group of initial keywords in the keyword library. In this way, high-frequency keywords without a substantive meaning and uncommon low-frequency keywords are removed, and the word library is constructed by using commonly used intermediate-frequency keywords with a substantive meaning. This can reduce a computing amount of subsequent tag matching and implement more accurate tag matching.

In still another implementation of the first aspect, the video information further includes audio information and image information, and the determining the video feature of the to-be-labeled target video includes: determining an audio feature of the audio information by using a pre-trained audio model; determining a text feature of the text information by using a pre-trained text model; determining an image feature of the image information by using a pre-trained image model; and fusing the audio feature, the text feature, and the image feature, to determine the video feature. In this manner, the video feature may be accurately determined by mining multi-modal information of the video, thereby providing a basis for subsequent video tag matching.

In still another implementation of the first aspect, the fusing the audio feature, the text feature, and the image feature, to determine the video feature includes: masking the audio feature, the text feature, and the image feature by using a mask module in a pre-trained fusion model, to obtain a masked audio feature, a masked text feature, and a masked image feature, where the mask module is configured to identify, from the audio feature, the text feature, and the image feature, a non-correlated feature that does not match the target video; and fusing the masked audio feature, the masked text feature, and the masked image feature by using the fusion model, to determine the video feature. In this manner, the non-correlated feature is masked, to implement filtering of different modality features and improve final keyword matching precision.

In still another implementation of the first aspect, the determining, based on the video feature, at least one keyword from the keyword library as a tag of the target video includes: determining a group of keyword features of a group of keywords by using a pre-trained text model, where the group of keywords is a set of keywords in the keyword library; and determining, based on the video feature and the group of keyword features, at least one keyword from the group of keywords as the tag of the target video. In this manner, a keyword feature is determined by using a text pre-training model, thereby providing a basis for subsequent keyword matching.

In still another implementation of the first aspect, the determining at least one keyword from the group of keywords as the tag of the target video includes: mapping the group of keyword features to a group of first keyword features through a first feature mapping layer; mapping the video feature to a first video feature through a second feature mapping layer, where a spatial difference between feature space in which each first keyword feature in the group of first keyword features is located and feature space in which the first video feature is located is less than a spatial difference between feature space in which the keyword feature is located and feature space in which the video feature is located; and determining, based on the first video feature and the group of first keyword features, at least one keyword that matches the target video as the tag of the target video. In this manner, a fused multi-modal feature and a text feature are mapped to space that is closer to each other for measurement. This helps improve accuracy of subsequent feature matching.

In still another implementation of the first aspect, the determining, based on the first video feature and the group of first keyword features, the tag of the target video includes: separately mapping the group of first keyword features and the first video feature to a group of second keyword features and a second video feature through a third feature mapping layer, where a spatial difference between feature space in which each second keyword feature in the group of second keyword features is located and feature space in which the second video feature is located is less than the spatial difference between the feature space in which the first keyword feature is located and the feature space in which the first video feature is located; and determining, based on the second video feature and the group of second keyword features, at least one keyword that matches the target video as the tag of the target video. In this manner, a fused multi-modal feature and a text feature are mapped to isomorphic space for measurement. This helps further improve the accuracy of subsequent feature matching.

In still another implementation of the first aspect, the determining, based on the second video feature and the group of second keyword features, the tag of the target video includes: determining a matching degree between the video feature and a second keyword feature of each keyword in the group of keywords; determining at least one keyword from the group of keywords, where a matching degree between a second keyword feature of the at least one keyword and the video feature is greater than a threshold matching degree; and determining the at least one keyword as the tag of the target video. In this manner, the keywords are filtered by using a matching degree, so that accuracy of video labeling can be improved.

In still another implementation of the first aspect, the method further includes updating the keyword library based on the at least one keyword that is used as the tag of the target video. In this manner, the keyword library is further updated by using the keyword that is determined as the tag, so that a more accurate keyword can be retained in the word library, and accuracy of video labeling can be significantly improved through continuous iterative update.

In still another implementation of the first aspect, the method further includes: obtaining the target video as a sample video; obtaining the tag of the target video as a sample tag; applying the sample video, the sample tag, and the keyword library to a tag model, to determine a predicted tag of the sample video, where the tag model includes; and updating a parameter value of the tag model based on an error between the sample tag and the predicted tag. In this manner, the target video and the determined tag are used as samples to perform iterative training on the model, so that a distance between the video feature and the keyword feature used as the tag can be continuously shortened, robustness of the model is higher, and video labeling accuracy of the model is further improved.

In still another implementation of the first aspect, the tag model includes one or more of an audio model, a text model, an image model, a fusion model, a first feature mapping layer, a second feature mapping layer, and a third feature mapping layer. In this manner, training of one or more sub-models in the model may be flexibly selected.

According to a second aspect of the present disclosure, an apparatus for determining a tag of a video is provided. The apparatus includes: a word library construction module, configured to construct, based on a plurality of videos, a keyword library for labeling a video; a target video feature determining module, configured to determine a video feature of a to-be-labeled target video; and a video tag module, configured to determine, based on the video feature, at least one keyword from the keyword library as a tag of the target video. The apparatus for determining a tag of a video may include functional modules configured to implement the method according to any one of the first aspect or the possible implementations of the first aspect.

According to a third aspect of the present disclosure, an electronic device is provided. The electronic device includes at least one computing unit and at least one memory. The at least one memory is coupled to the at least one computing unit and stores instructions for execution by the at least one computing unit, and when the instructions are executed by the at least one computing unit, the device is enabled to perform the method according to any one of the first aspect or the possible implementations of the first aspect.

According to a fourth aspect of the present disclosure, a computer-readable storage medium is provided. The computer-readable storage medium stores one or more computer instructions, and the one or more computer instructions are executed by a processor to implement the method according to any one of the first aspect or the possible implementations of the first aspect.

According to a fifth aspect of the present disclosure, a computer program product is provided. The computer program product includes computer-executable instructions. When the computer-executable instructions are executed by a processor, a computer is enabled to perform instructions in some or all steps of the method according to any one of the first aspect or the possible implementations of the first aspect.

It may be understood that the apparatus for determining a tag of a video according to the second aspect, the electronic device according to the third aspect, the computer storage medium according to the fourth aspect, or the computer program product according to the fifth aspect is configured to implement the method according to the first aspect. Therefore, explanations or descriptions of the first aspect are also applicable to the second aspect, the third aspect, the fourth aspect, and the fifth aspect. In addition, for beneficial effects that can be achieved in the second aspect, the third aspect, the fourth aspect, and the fifth aspect, refer to the beneficial effects in the corresponding method. Details are not described herein again.

These aspects and other aspects of the present invention are simpler and easier to understand in descriptions of (a plurality of) embodiments below.

### BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.
FIG. 1 is a diagram of an example environment in which a plurality of embodiments of the present disclosure can be implemented;
FIG. 2 is a flowchart of a process of determining a tag of a video according to some embodiments of the present disclosure;
FIG. 3 is a flowchart of a process of constructing a keyword library according to some embodiments of the present disclosure;
FIG. 4 is a diagram of a process of determining a video feature of a video according to some embodiments of the present disclosure;
FIG. 5 is a diagram of a process of matching a keyword and a target video according to some embodiments of the present disclosure;
FIG. 6 is a diagram of a tag model according to some embodiments of the present disclosure;
FIG. 7 is a diagram of a procedure of determining a tag of a video according to some embodiments of the present disclosure;
FIG. 8 is a block diagram of an apparatus for determining a tag of a video according to some embodiments of the present disclosure; and
FIG. 9 is a block diagram of an example device that may be used to implement an embodiment of the present disclosure.

### DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein. On the contrary, these embodiments are provided for a more thorough and complete understanding of the present disclosure. It should be understood that the accompanying drawings and embodiments of the present disclosure are merely used as examples and are not intended to limit the protection scope of the present disclosure.

In descriptions of embodiments of the present disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The following may further include other explicit and implied definitions.

As used in this specification, the term "model" may learn corresponding input-to-output association from training data, and generate a corresponding output for a given input after completing training. The model may be generated based on a machine learning technology. Deep learning is a machine learning algorithm that uses multi-layer processing units to process inputs and provide corresponding outputs. A neural network model is an example of a deep learning-based model. In this specification, the "model" may also be referred to as a "machine learning model", a "learning model", a "machine learning network", or a "learning network", and these terms may be used interchangeably in this specification. A "neural network" is a machine learning network based on deep learning. The neural network is capable of processing an input and providing a corresponding output, and generally includes an input layer, an output layer, and one or more hidden layers between the input layer and the output layer.

Generally, machine learning may usually include three phases: a training phase, a testing phase, and a use phase (also referred to as an inference phase). In the training phase, a given model can be trained iteratively by using a large amount of training data until the model can obtain, from the training data, consistent inference that meets an expected objective. Through training, the model may be considered to be able to learn input-to-output association (also referred to as input-to-output mapping) from the training data. A parameter value of the trained model is determined. In the testing phase, a test input is applied to the trained model to test whether the model can provide a correct output, to determine performance of the model. In the use phase, the model may be used to process an actual input based on the parameter value obtained through training, and determine a corresponding output.

As mentioned above, there is a need for a solution for efficiently and accurately labeling videos. Currently, there are some methods for tagging videos: (1) Solution 1: First, a similar video search model is trained by using labeled video data in a video database; then, for a to-be-processed unlabeled video, the model is used to match a most similar video in the video database for the to-be-processed video; and then, a tag of the similar video is used as a tag of the video. (2) Solution 2: For a to-be-processed unlabeled video, a most similar video is first searched in a video database based on an existing tag, and then a tag that is included in tags of the similar video and that is not present in the video as a supplementary tag of the video. (3) Solution 3: For a to-be-processed unlabeled video, several similar videos are first found in a video database, tags of these similar videos are used as candidate tags of the to-be-processed video, and then a final tag of the to-be-processed video is determined from the candidate tags in a user interaction manner. It should be noted that the foregoing three solutions should not be considered as the current technology for the present disclosure.

For the foregoing solutions, at least some of the following problems may exist: (1) The solution 1 depends on the video database, and needs to train a similarity search model by using an existing video tag and similarity labeling. However, the labeling needs to be manually performed, and labor and time costs of the labeling are high. In addition, videos have a significant timeliness feature. To be specific, a popular video content type changes rapidly with time. In a case of new video content, the technical solution usually fails because a similar video cannot be found in the video database. In this case, manual labeling is required again. (2) A defect of the solution 2 is similar to that of the solution 1, and the solution 2 depends on manual labeling, and also cannot resolve the problem of timeliness. (3) A defect of the solution 3 is similar to that of the solution 1 and the solution 2, and the solution 3 depends on manual labeling, and also cannot resolve the problem of timeliness. In addition, in the solution 3, determining a tag further depends on subjective judgment of a user.

According to embodiments of the present disclosure, an improved solution for determining a tag of a video is proposed. To resolve the problems of dependence on manual labeling and tag timeliness in the traditional solutions, this solution introduces a keyword library constructed based on massive videos. The word library is constructed by automatically mining a plurality of videos, and new videos may be continuously used to construct the word library, thereby resolving the timeliness problem. Then, a keyword in the word library is matched with a to-be-labeled target video, to determine a tag of the target video. This solution does not depend on manual labeling, and can accurately determine a tag of a video and implement automatic labeling of video tags.

Example embodiments of the present disclosure are discussed in detail below with reference to the accompanying drawings.

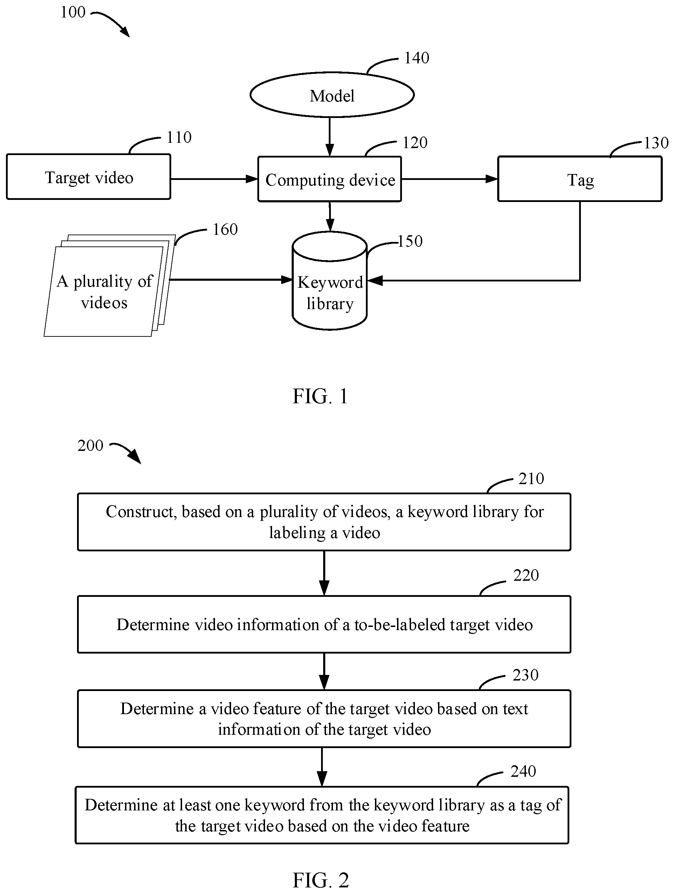

FIG. 1 is a diagram of an example environment 100 in which a plurality of embodiments of the present disclosure can be implemented. It should be understood that the environment 100 shown in FIG. 1 is merely an example in which embodiments of the present disclosure can be implemented, and is not intended to limit the scope of the present disclosure. Embodiments of the present disclosure are also applicable to another system or architecture.

As shown in FIG. 1, the system 100 may include a computing device 120. The computing device 120 may be configured to receive a to-be-labeled target video 110. The computing device 120 generates a tag of the target video 110 based on the target video 110. Specifically, the computing device 120 may generate the tag of the target video 110 by using a model 140 and a keyword library 150. In some embodiments, the computing device 120 may include but is not limited to a personal computer, a server computer, a handheld or laptop device, a mobile device (for example, a mobile phone, a personal digital assistant PDA, or a media player), a consumer electronic product, a minicomputer, a mainframe computer, a cloud computing resource, and the like.

In the present disclosure, the model 140 may include different types of models or modules designed to perform various types of tasks associated with determining the tag of the target video 110. In some embodiments, the model 140 may include one or more of an audio model, a text model, an image model, a fusion model, a first feature mapping layer, a second feature mapping layer, and a third feature mapping layer. Applications of the models listed above are described in detail below. Examples of the model 140 include but are not limited to various deep neural networks (DNNs), convolutional neural networks (CNNs), support vector machines (SVMs), decision trees, random forest models, and the like. In implementation of the present disclosure, the model may also be referred to as a "neural network", a "learning model", a "learning network", a "model", and a "network", and these terms may be used interchangeably in this specification.

The model 140 may be constructed as a learning network, and the learning network may include a plurality of networks, where each network may be a multi-layer neural network, and may include a large quantity of neurons. In a training process, a corresponding parameter of a neuron in each network can be determined. Parameters of neurons in these networks are collectively referred to as parameters of the model 140. A training process of the model 240 may be performed in an iteration manner until at least some of the parameters of the model 140 converge or a predetermined quantity of iterations is reached, to obtain a final model parameter. In some embodiments, one or more models in the model 140 may be pre-trained. Optionally, in some other embodiments, the target video and the tag thereof may be used as samples to iteratively train one or more models in the model 140.

The computing device 120 may further construct the keyword library 150 according to a predetermined rule based on a plurality of videos 160, for example, massive online video data obtained from the internet. The keyword library 150 includes the most "popular" keywords, and these keywords may be subsequently matched as the tag of the target video 110. The keyword library 140 may be continuously iteratively updated. In some embodiments, the keyword library 140 may be updated based on a keyword determined as a target tag. Optionally, in some other embodiments, the keyword library 140 may alternatively be updated based on a latest video scraped from the internet. Additionally or optionally, the keyword library 140 may be updated by using the keyword used as the target tag and the latest video. A specific process is described below.

It should be understood that these apparatuses and/or units in the apparatuses included in the environment 100 are merely examples, and are not intended to limit the scope of the present disclosure. It should be understood that the environment 100 may further include additional apparatuses and/or units that are not shown. To explain a principle of the foregoing solution more clearly, the following describes in more detail a process of determining a tag of a video with reference to FIG. 2 to FIG. 5.

FIG. 2 is a flowchart of a process 200 of determining a tag of a video according to some embodiments of the present disclosure. The process 200 may be implemented, for example, by the computing device 120 in FIG. 1. For ease of description, the following describes the process 200 with reference to FIG. 1. In a block 210, the computing device 120 constructs, based on text information of a plurality of videos, a keyword library for labeling a video. For example, the computing device 120 may obtain the latest and most popular massive videos from the internet at intervals for constructing the keyword library. Processing of a video is used as an example. The computing device 120 may first extract text information in the video, and then construct the keyword library based on the text information. Optionally, the computing device 120 may further obtain audio information, and then convert the audio information into text information, to construct the keyword library. In this manner, the keyword library may be constructed by using information in the videos scraped from the internet, so that the keywords in the word library are highly correlated with the videos and have timeliness, thereby providing a basis for subsequent tag determining.

In some embodiments, the computing device 120 may obtain a title, a subtitle, and the like of the video as text information. The computing device 120 may further obtain audio information of the video, and then convert the audio information into text information by using an automatic speech recognition (Automatic Speech Recognition, ASR) technology. Then, the computing device 120 may parse the text information extracted from different aspects of the video, for example, recognize the text information by using an optical character recognition (Optical Character Recognition, OCR) technology, to determine a plurality of segments in the text information. For example, for a car introduction video, the computing device 120 may parse the following segment from a subtitle: "Bugatti is a car brand owned by XX company", or may parse the following segment from speech information of a video author: "Bugatti sports cars pay great attention to details and balance of the cars", or may parse the following segment from a title: "Fifty million, sold out, the last hope". It should be noted that the foregoing is merely an example, and a segment used to describe video content may be further extracted from any modality information related to the video. This is not limited herein in the present disclosure. In this manner, the keyword library may be constructed by mining various information in the video, so that types of the keywords in the word library are rich, and subsequent more accurate tag matching is implemented.

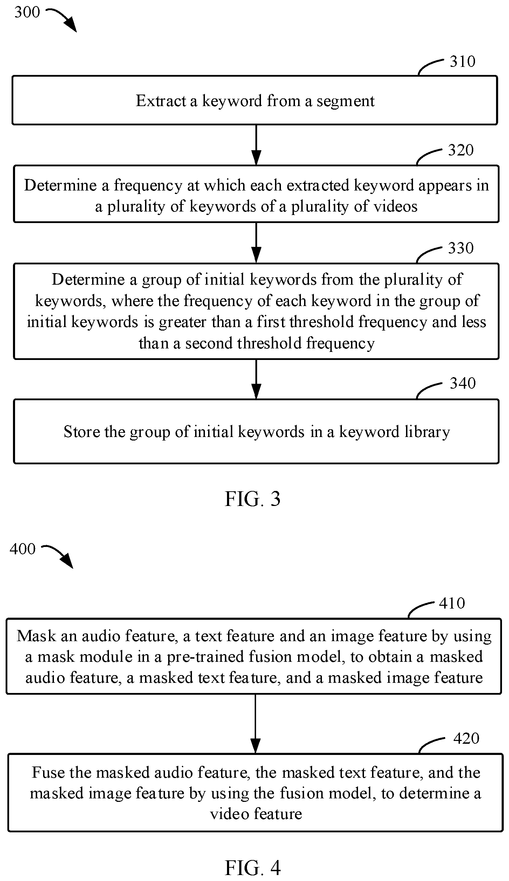

Then, the computing device 120 may construct the keyword library 150 based on the determined segment. Descriptions are provided with reference to FIG. 3. FIG. 3 is a flowchart 300 of a process of constructing a keyword library according to some embodiments of the present disclosure. In a block 310, the computing device 120 extracts a keyword from the segment. The computing device 120 may segment the determined segment into at least one segmented word by using an appropriate word segmentation model or word segmentation algorithm. For example, "Bugatti is a car brand owned by XX company" is segmented into "Bugatti", "is", "XX company", "owned", "by", and "car brand". In some embodiments, a word segmentation granularity may be set. For example, each word cannot exceed four characters. Optionally, in some embodiments, a segmented word having one character may be directly removed. For example, the segmented words "is" and "by" that have no substantive meaning may be removed, so that a subsequent computing amount can be reduced, and computing resources can be saved. Alternatively, word segmentation processing may be performed on the foregoing segment in another word segmentation manner. The word segmentation manner is not limited in the present disclosure.

In a block 320, the computing device 120 determines a frequency at which each extracted keyword appears in a plurality of keywords of a plurality of videos. It may be understood that the computing device 120 may obtain a plurality of keywords from a plurality of segments of the plurality of videos 160 through segmentation, where there are repeated keywords. The computing device 120 may collect statistics on a word frequency of each keyword, that is, a frequency at which each word appears in a plurality of words. For example, 10000 keywords are obtained through statistics collection, and the 10000 keywords appear at different frequencies in these segments. A frequency of "first" is 50%, a frequency of "car" is 30%, a frequency of "performance" is 10%, a frequency of "maintenance" is 10%, a frequency of "spark plug" is 3%, and the like.

In a block 330, the computing device 120 determines a group of initial keywords from the plurality of keywords, where the frequency of each keyword in the group of initial keywords is greater than a first threshold frequency and less than a second threshold frequency. For example, the computing device 120 may select the group of initial keywords based on the statistical result. For example, the first threshold frequency may be 8%, and the second threshold frequency may be 50%. The computing device 120 may determine keywords whose frequencies are greater than 8% and less than 50% as a group of keywords. In this way, high-frequency keywords without a substantive meaning such as "first" and uncommon low-frequency words such as "spark plug" are removed. The computing device 120, for example, determines 8000 keywords from the 10000 keywords based on the frequency to construct a keyword library. In this way, high-frequency keywords without a substantive meaning and uncommon low-frequency keywords are removed, and the word library is constructed by using commonly used intermediate-frequency keywords with a substantive meaning. This can reduce a computing amount of subsequent tag matching and implement more accurate tag matching.

In a block 340, the computing device 120 stores the group of initial keywords in the keyword library. For example, the computing device 120 stores the group of keywords as initial keywords in the word library for subsequent determining of the tag of the target video 110. After constructing the keyword library 160, the computing device 120 then determines a video feature of the target video 110.

Return to FIG. 2 for description. In a block 220, the computing device 120 determines video information of the to-be-labeled target video 110, where the video information includes at least text information of the target video 110. For example, the computing device 120 may extract a subtitle in the target video 110, a title of the target video 110, and the like as the text information. It may be understood that, to subsequently determine a video feature more accurately, the computing device 120 may further determine the video information based on, for example, image information and audio information. This is described in detail below.

In a block 230, the computing device 120 determines the video feature of the to-be-labeled target video 110 based on the text information of the target video. For example, the computing device 120 may determine a text feature of the text information by using a pre-trained text model in the model 140, and then use the text feature as the video feature of the target video. When the video information includes the image information and the audio information, the computing device 120 may further determine an audio feature of the audio information by using a pre-trained audio model in the model 140, and determine an image feature of the image information by using a pre-trained image model in the model 140. Then, the audio feature, the text feature, and the image feature are fused, to determine the video feature.

In some embodiments, the computing device 120 may obtain a plurality of image frames of the video as the image information, and then apply the plurality of image frames to the image model to determine a plurality of image features. The computing device 120 may obtain audio of the video, and then apply an audio frame to the audio model to determine the audio feature. The computing device 120 may obtain text related to the video, for example, a subtitle and a title, and then apply the text to the text model to determine the text feature. The text model may be bidirectional encoder representations from transformers (Bidirectional Encoder Representations from Transformers, BERT), a convolutional neural network-based text classification model, such as a TextCNN, a TextRCNN, or the like. This is not limited in the present disclosure. Then, the computing device 120 may fuse the foregoing features to determine the video feature. In this manner, the video feature may be accurately determined by mining multi-modal information of the video, thereby providing a basis for subsequent video tag matching.

Optionally, in some embodiments, the computing device 120 may alternatively perform modal correlation analysis before fusion of the image feature, the audio feature, and text feature, to remove a non-correlated feature. It may be understood that there is usually a case in which a modality is not correlated in modalities of the target video 110, for example, cases commonly seen in videos: background music that is not correlated with video content or text content that does not match video content. All these factors introduce noise, thereby affecting determining of the video feature. These features need to be masked, and further details are described with reference to FIG. 4. FIG. 4 is a diagram of a process 400 of determining a video feature of a video according to some embodiments of the present disclosure.

In a block 410, the computing device 120 masks the audio feature, the text feature and the image feature by using a mask module in a pre-trained fusion model, to obtain a masked audio feature, a masked text feature, and a masked image feature, where the mask module is configured to identify, from the audio feature, the text feature, and the image feature, a non-correlated feature that does not match the target video. The computing device 120 may remove the non-correlated feature from multi-modal features by using the mask module in the fusion model. For example, in a video having only subtitles and audio, each image frame that is a black image may be determined as a non-correlated feature; or in a comedy video with some sad music, the music may also be determined as a non-correlated feature. The computing device 120 may mask these features, so that features represented by these features are not applicable in subsequent feature fusion. In this manner, the non-correlated feature is masked, to implement filtering of different modality features and improve final keyword matching precision.

In a block 420, the computing device 120 fuses the masked audio feature, the masked text feature, and the masked image feature by using the fusion model, to determine the video feature. For example, the computing device 120 may splice the multi-modal features obtained through modal correlation analysis, and then provide, as an input, spliced features for an appropriate transformer model to perform feature fusion, so that information representations of the target video 110 in an image modality, an audio modality, a semantic modality, and the like are fused with each other, to obtain a more accurate video feature representation. After determining the video feature, the computing device 120 then matches a keyword in the keyword library with the video.

Return to FIG. 2 for description. In a block 240, the computing device 120 determines, based on the video feature, at least one keyword from the keyword library 150 as the tag of the target video 110. The computing device 120 may first determine a group of keyword features of a group of keywords by using a pre-trained text model, and then determine, based on the video feature and the group of keyword features, at least one keyword from the group of keywords as the tag of the target video. It should be noted that, in this specification, "a group of keywords" is a set of keywords in the keyword library, and may be a part or all of keywords in the keyword library. This is not limited herein in the present disclosure.

In some embodiments, the computing device 120 may determine features of all keywords in the keyword library, for example, features of the 8000 initial keywords, and then use a keyword that matches the video feature as the tag of the target video. Optionally, in some embodiments, the computing device 120 may first determine a group of keywords from the word library based on classification of the video. For example, if it is determined that the video is a car video, 5000 words are further selected from the 8000 words for matching.

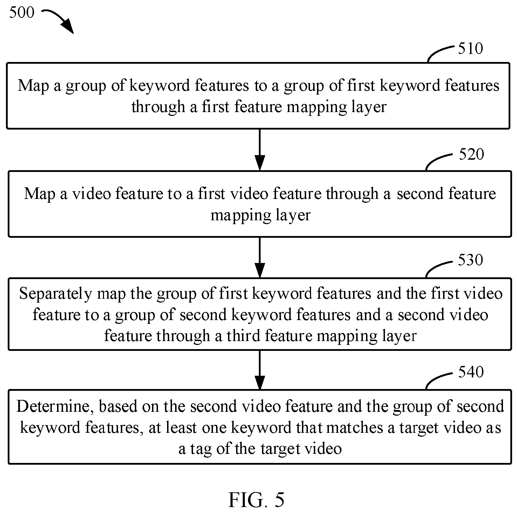

It may be understood that the video feature is a feature obtained by fusion of a plurality of modalities, and feature space to which the feature belongs may be greatly different from feature space to which a keyword feature belongs. Before matching, the multi-modal video feature and the single-modal keyword feature may be mapped to isomorphic space for measurement. Descriptions are provided with reference to FIG. 5. FIG. 5 is a diagram of a process 500 of matching a keyword with a target video according to some embodiments of the present disclosure.

In a block 510, the computing device 120 maps the group of keyword features to a group of first keyword features through a first feature mapping layer. The feature mapping layer herein may be implemented by a multi-layer perceptron (Multi-Layer Perceptron, MLP). The feature mapping layer may map a feature vector to different space. In a block 520, the computing device 120 maps the video feature to a first video feature through a second feature mapping layer. A spatial difference between feature space in which each first keyword feature in the group of first keyword features is located and feature space in which the first video feature is located is less than a spatial difference between feature space in which the keyword feature is located and feature space in which the video feature is located. For example, the computing device 120 uses the video feature and the keyword feature as inputs of two MLPs respectively, and a spatial difference between output features is reduced, so that matching between subsequent features is more accurate.

In a block 530, the computing device 120 separately maps the group of first keyword features and the first video feature to a group of second keyword features and a second video feature through a third feature mapping layer. A spatial difference between feature space in which each second keyword feature in the group of second keyword features is located and feature space in which the second video feature is located is less than the spatial difference between the feature space in which the first keyword feature is located and the feature space in which the first video feature is located. For example, after respectively passing through the different MLPs, the video feature and the keyword feature that spatially approach may be mapped to isomorphic space by using a shared MLP. This facilitates subsequent tag matching.

In a block 540, the computing device 120 determines, based on the second video feature and the group of second keyword features, at least one keyword that matches the target video as the tag of the target video. For example, the computing device 120 may determine a matching degree between the video feature and a second keyword feature of each keyword in the group of keywords. Then, at least one keyword is determined from the group of keywords, and a matching degree between a second keyword feature of the at least one keyword and the video feature is greater than a threshold matching degree. Then, the at least one matched keyword is determined as the tag of the target video.

In an example, with reference to Table 1, the computing device 120 may receive a plurality of target videos, for example, seven target videos, and then separately match video features of the seven target videos with keyword features of seven keywords. In Table 1, 0 indicates that a matching degree between a video and a keyword is less than the threshold matching degree, and 1 indicates that a matching degree between a video and a keyword is greater than the threshold matching degree. In this case, the computing device 120 may use a keyword 1 as a tag of a video 1, use a keyword 2 and a keyword 3 as a tag of a video 2, and the like. It should be noted that the foregoing numbers are merely examples, and are not intended to limit the scope of the present disclosure.

**Table 1**

| Match or not | Keyword 1 | Keyword 2 | Keyword 3 | Keyword 4 | Keyword 5 | Keyword 6 | Keyword 7 |
|---|---|---|---|---|---|---|---|
| Video 1 | 1 | 0 | 0 | 0 | 0 | 0 | 0 |
| Video 2 | 0 | 1 | 1 | 0 | 0 | 0 | 0 |
| Video 3 | 0 | 1 | 0 | 0 | 0 | 0 | 0 |
| Video 4 | 0 | 1 | 1 | 0 | 1 | 0 | 0 |
| Video 5 | 0 | 0 | 0 | 1 | 1 | 0 | 0 |
| Video 6 | 0 | 0 | 0 | 0 | 0 | 1 | 1 |
| Video 7 | 0 | 0 | 0 | 0 | 0 | 1 | 0 |

The foregoing describes how to determine the tag for the target video. It may be understood that the initial keywords in keyword library determined above are only keyword segments determined based on the text information related to the plurality of videos, and are not necessarily suitable for being used as the tag of the video. The keyword library may be further updated based on the keyword that is determined as the tag.

In some embodiments, the computing device 120 updates the keyword library based on the at least one keyword that is used as the tag of the target video. For example, the computing device 120 first determines a tag of one or more of the plurality of videos 160. Then, word frequency statistics are collected on keywords that are determined as tags according to the foregoing method. The computing device 120 determines a frequency at which each extracted keyword appears in a plurality of keywords of the plurality of videos. For example, the car video described above is still used as an example, and the computing device 120 may re-determine, based on a word frequency, "performance explanation", "configuration information", "car show", "car introduction", and the like as a new keyword library. It may be learned that, compared with the foregoing keywords determined from the text information of the video, the keywords in the updated keyword library are more suitable for being used as a tag.

It may be understood that, for the plurality of videos obtained from the internet, after a plurality of times of tag determining and keyword updating, keywords in the keyword library are stable, and these keywords are suitable for being used as a tag of a video. The latest and most popular videos may be obtained at intervals to construct the keyword library, so that the keyword library has timeliness, and a tag of a video has timeliness. This facilitates subsequent video search, video recommendation, and the like. In addition, the foregoing process does not need manual intervention, thereby reducing labor costs.

According to embodiments of the present disclosure, the keyword library is constructed by efficiently using massive online videos and mining text information in video information, and then matching is performed between the video feature obtained by fusion of a plurality of modalities and the keyword feature in the keyword library, so that automatic labeling of a video keyword can be implemented without manual intervention. In addition, the keyword library is continuously updated by using keywords in massive videos, so that the tag of the video is associated with the latest and most popular keywords, and the timeliness problem is resolved. The foregoing describes determining of the tag and construction and update of the keyword library, and the following describes training of a model associated with the determining of the tag.

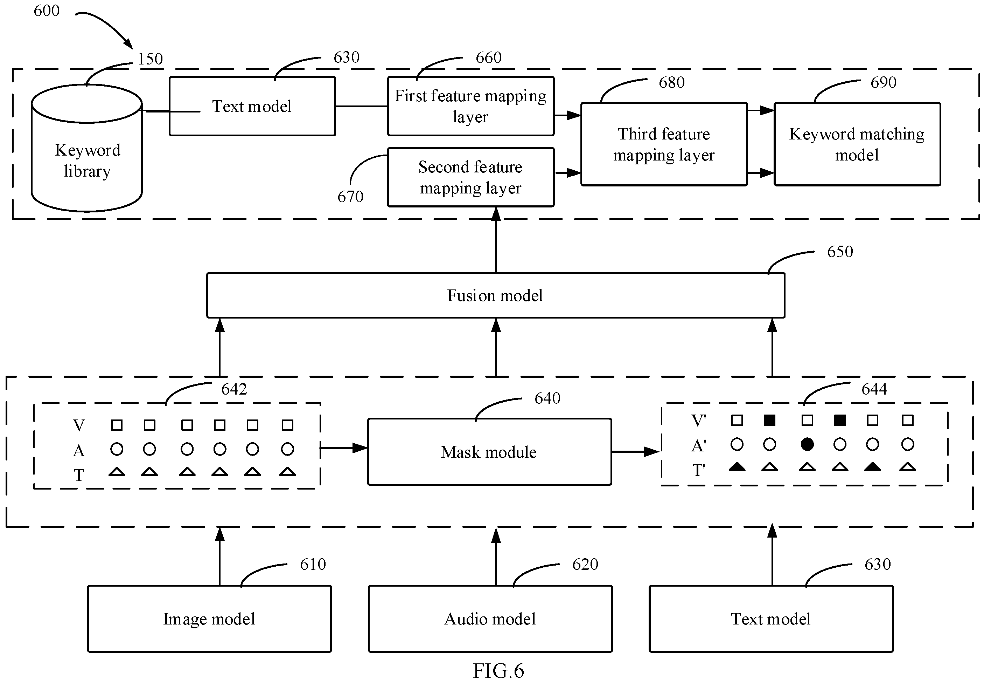

FIG. 6 is a diagram of a tag model 600 according to some embodiments of the present disclosure. As shown in FIG. 6, the tag model may include one or more of an audio model 620, a text model 630, an image model 610, a mask module 640, a fusion model 650, a first feature mapping layer 660, a second feature mapping layer 670, and a third feature mapping layer 680. The mask module 640 may be included in the fusion model 650, and is shown as a separate module for clarity. Any suitable network structure may be used to implement one or more models in the tag model 600, including but not limited to a support vector machine (SVM) model, a Bayesian model, a random forest model, and various deep learning/neural network models, such as a convolutional neural network (CNN), a recurrent neural network (RNN), a deep neural network (DNN), and a deep reinforcement learning network (DQN). The scope of the present disclosure is not limited in this aspect.

First, an application process of the model is described. First, the to-be-labeled target video 110 may be applied to the image model 610, the audio model 620, and the text model 630 to determine an image feature V, an audio model A, and a text model T of the target video 110. As shown in a dashed box 642, the image feature V, the audio model A, and the text model T are respectively represented by using different graphic shapes, namely, squares, circles, and triangles. Each graphic shape may be a token, and may correspond to an image frame, an audio frame, or a segmented word. Then, the image feature V, the audio model A, and the text model T are applied to the mask module to obtain a masked image feature V', a masked audio model A', and a masked text model T', as shown in a dashed box 644. Some of the graphic shapes are filled with black solid. This means that image frames, audio frames, or segmented words corresponding to these graphic shapes are not correlated with the video.

Then, the masked image feature V', the masked audio model A', and the masked text model T' may be applied to the fusion model to obtain a fused feature. Matching is performed, by using a keyword matching model, on the fused feature that is processed by the second feature layer and the shared third feature layer and a group of keyword features that are processed by the first feature layer and the shared third feature layer (for example, refer to the foregoing Table 1), to determine a keyword that matches the target video 110.

The following describes a training process of the foregoing model. In some embodiments, the computing device 120 may obtain the target video as a sample video, obtain the tag of the target video as a sample tag, and then train the model by using the sample video and the sample tag. The computing device 120 may apply the sample video, the sample tag, and the keyword library to the tag model 600, to determine a predicted tag of the sample video. Then, the computing device 120 updates a parameter value (for example, a weight and an offset) of one or more models in the tag model 600 based on an error between the sample tag and the predicted tag, to achieve a closer distance between the target video and the related keyword. It may be understood that the foregoing training process is continuously repeated, so that accuracy of model prediction can be increased. In addition, it may be understood that model training may be end-to-end training of the entire tag model, or may be training of a sub-model in the tag model. This is not limited herein in the present disclosure. According to the foregoing training process of the present disclosure, manual labeling is not needed, and only iterative training needs to be performed continuously based on the updated keyword library and the determined tag, to implement automatic determining of a video tag.

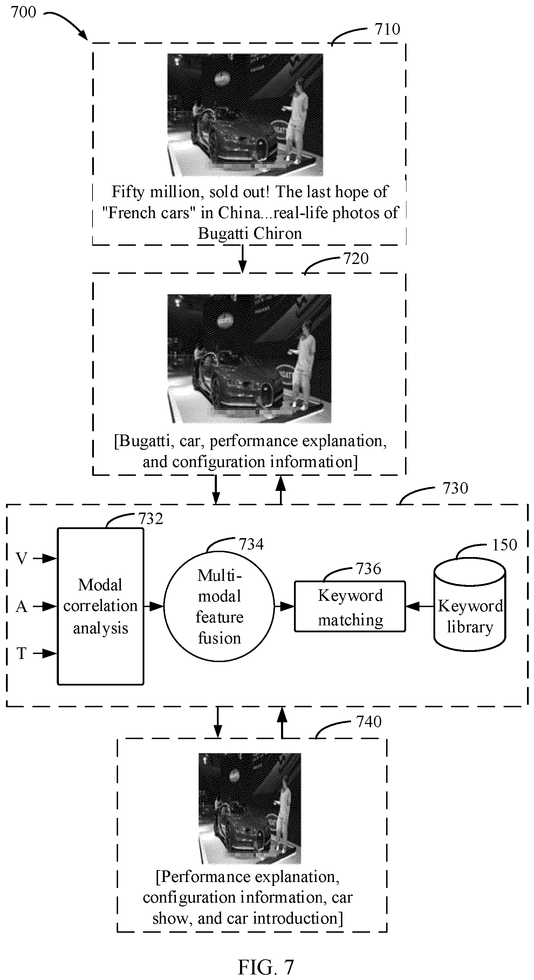

FIG. 7 is a diagram of a procedure of determining a tag of a video according to some embodiments of the present disclosure. As shown in FIG. 7, for a video 710 obtained from the internet, the video is first parsed according to the method described above to determine keywords "Bugatti", "car", "performance explanation", and "configuration Information" as shown in a box 720 as a group of initial keywords in the keyword library 150. For brevity, only one video is shown in the figure, but it may be understood that there are massive videos to construct the keyword library.

For this video 710, modal correlation analysis 732 (mask processing), multi-modal feature fusion 734, and keyword matching 736 that are described above are applied to determine a tag of the video 710, for example, "performance explanation", "configuration information", "car show", and "car introduction" as shown in a box 740. As described above, the keyword library 150 may be updated by using the keywords "performance explanation", "configuration information", "car show", and "car introduction" that are determined as the tag. The video 710 may further be used as a sample video, and the keywords "performance explanation", "configuration information", "car show", and "car introduction" may be used as sample tags to train the model. Through a plurality of times of iterations and updates, the keywords in the keyword library gradually become stable, and the model converges. It may be learned that the foregoing process does not need manual intervention and has a high prediction accuracy.

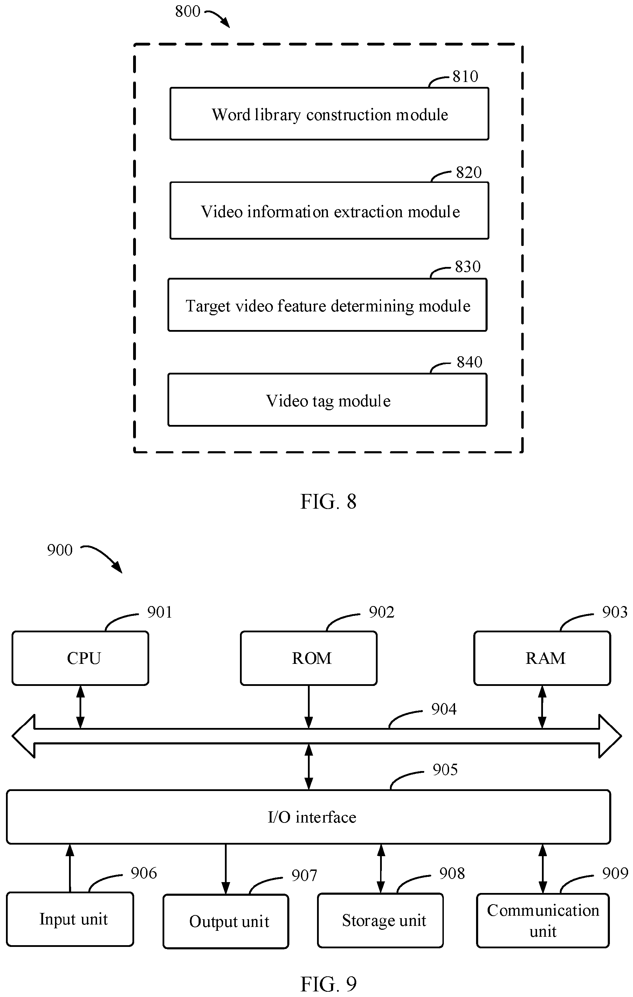

FIG. 8 is a block diagram of an apparatus 800 for determining a tag of a video according to some embodiments of the present disclosure. The apparatus 800 may be implemented as or included in the computing device 120 for determining a video in FIG. 1.

The apparatus 800 may include a plurality of modules for performing corresponding steps in the process 200 discussed in FIG. 2. As shown in FIG. 8, the apparatus 800 includes a word library construction module 810, configured to construct, based on text information of a plurality of videos, a keyword library for labeling a video; a video information extraction module 820, configured to determine video information of a to-be-labeled target video, where the video information includes at least text information of the target video; a target video feature determining module 830, configured to determine a video feature of the target video based on the text information of the target video; and a video tag module 840, configured to determine, based on the video feature, at least one keyword from the keyword library as a tag of the target video.

In some embodiments, the word library construction module 810 may include: a video obtaining module, configured to obtain the plurality of videos through the internet; a first text extraction module, configured to extract first text information of a first video in the plurality of videos; and a first word library generation module, configured to construct the keyword library based on at least the first text information and audio information.

In some embodiments, the first word library generation module may include: a first audio extraction module, configured to extract audio information of the first video; an audio conversion module, configured to convert the audio information into second text information; a text parsing module, configured to parse the first text information and the second text information, to determine a segment in the text information; and a second word library generation module, configured to construct the keyword library based on the segment.

In some embodiments, the second word library generation module may include: a keyword extraction module, configured to extract a keyword in the segment; a frequency determining module, configured to determine a frequency at which each extracted keyword appears in a plurality of keywords of the plurality of videos; a keyword screening module, configured to determine a group of initial keywords from the plurality of keywords, where the frequency of each keyword in the group of initial keywords is greater than a first threshold frequency and less than a second threshold frequency; and a keyword storage module, configured to store the group of initial keywords in the keyword library.

In some embodiments, the video information further includes audio information and image information. The target video feature determining module 830 may include: an audio feature determining module, configured to determine an audio feature of the audio information by using a pre-trained audio model; a text feature determining module, configured to determine a text feature of the text information by using a pre-trained text model; an image feature determining module, configured to determine an image feature of the image information by using a pre-trained image model; and a first feature fusion module, configured to fuse the audio feature, the text feature, and the image feature, to determine the video feature.

In some embodiments, the first feature fusion module may include: a modal correlation analysis module, configured to mask the audio feature, the text feature, and the image feature by using a mask module in a pre-trained fusion model, to obtain a masked audio feature, a masked text feature, and a masked image feature, where the mask module is configured to identify, from the audio feature, the text feature, and the image feature, a non-correlated feature that does not match the target video; and a second feature fusion module, configured to fuse the masked audio feature, the masked text feature, and the masked image feature by using the fusion model, to determine the video feature.

In some embodiments, the video tag module 840 may include: a keyword feature determining module, configured to determine a group of keyword features of a group of keywords by using a pre-trained text model, where the group of keywords is a set of keywords in the keyword library; and a first tag matching module, configured to determine, based on the video feature and the group of keyword features, at least one keyword from the group of keywords as the tag of the target video.

In some embodiments, the first tag matching module may include: a first feature mapping module, configured to map the group of keyword features to a group of first keyword features through a first feature mapping layer; a second feature mapping module, configured to map the video feature to a first video feature through a second feature mapping layer, where a spatial difference between feature space in which each first keyword feature in the group of first keyword features is located and feature space in which the first video feature is located is less than a spatial difference between feature space in which the keyword feature is located and feature space in which the video feature is located; and a second tag matching module, configured to determine, based on the first video feature and the group of first keyword features, at least one keyword that matches the target video as the tag of the target video.

In some embodiments, the second tag matching module may include: a third feature mapping module, configured to separately map the group of first keyword features and the first video feature to a group of second keyword features and a second video feature through a third feature mapping layer, where a spatial difference between feature space in which each second keyword feature in the group of second keyword features is located and feature space in which the second video feature is located is less than the spatial difference between the feature space in which the first keyword feature is located and the feature space in which the first video feature is located; and a third tag matching module, configured to determine, based on the second video feature and the group of second keyword features, at least one keyword that matches the target video as the tag of the target video.

In some embodiments, the third tag matching module may include: a matching degree determining module, configured to determine a matching degree between the video feature and a second keyword feature of each keyword in the group of keywords; a keyword determining module, configured to determine at least one keyword from the group of keywords, where a matching degree between a second keyword feature of the at least one keyword and the video feature is greater than a threshold matching degree; and a tag determining module, configured to determine the at least one keyword as the tag of the target video.

In some embodiments, the apparatus 800 may further include a word library update module, configured to update the keyword library based on the at least one keyword that is used as the tag of the target video.

In some embodiments, the apparatus 800 may further include: a sample video obtaining module, configured to obtain the target video as a sample video; a sample tag obtaining module, configured to obtain the tag of the target video as a sample tag; a predicted tag determining module, configured to apply the sample video, the sample tag, and the keyword library to a tag model, to determine a predicted tag of the sample video; and a tag model training module, configured to update a parameter value of the tag model based on an error between the sample tag and the predicted tag.

In some embodiments, the tag model includes one or more of an audio model, a text model, an image model, a fusion model, a first feature mapping layer, a second feature mapping layer, and a third feature mapping layer.

FIG. 9 is a schematic block diagram of an example device 900 that may be used to implement an embodiment of the present disclosure. The device 900 may be implemented as or included in the computing device 120 in FIG. 1.

As shown in the figure, the device 900 includes a computing unit 901 that may perform various appropriate actions and processing based on computer program instructions stored in a random access memory (RAM) and/or read-only memory (ROM) 902 or computer program instructions loaded from a storage unit 907 into the RAM and/or ROM 902. The RAM and/or ROM 902 may further store various programs and data for an operation of the device 900. The computing unit 901 and the RAM and/or ROM 902 are connected to each other through a bus 903. An input/output (I/O) interface 904 is also connected to the bus 903.

A plurality of components in the device 900 are connected to the I/O interface 904, including: an input unit 905, for example, a keyboard or a mouse; an output unit 906, for example, various types of displays or speakers; the storage unit 907, for example, a magnetic disk or an optical disc; and a communication unit 908, for example, a network card, a modem, or a wireless communication transceiver. The communication unit 908 allows the device 900 to exchange information/data with another device over a computer network such as the internet and/or various telecommunication networks.

The computing unit 901 may be any general-purpose and/or dedicated processing component having processing and computing capabilities. Some examples of the computing unit 901 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, and microcontroller. The computing unit 901 performs the methods and processing described above, for example, the process 200, 300, 400, or 500. For example, in some embodiments, the process 200, 300, 400, or 500 may be implemented as a computer software program, and is tangibly included in a computer-readable medium, for example, the storage unit 907. In some embodiments, some or all of the computer program may be loaded and/or installed onto the device 900 by using the RAM and/or ROM and/or the communication unit 908. When the computer program is loaded into RAM and/or ROM and executed by computing unit 901, one or more steps of the process 200, 300, 400, or 500 described above may be performed. Optionally, in another embodiment, the computing unit 901 may be configured to perform the process 200, 300, 400, or 500 in any other appropriate manner (for example, by using firmware).

Program code for implementing the method of the present disclosure may be written in any combination of one or more programming languages. The program code may be provided to a processor or a controller of a general-purpose computer, a dedicated computer, or another programmable data processing apparatus, so that when the program code is executed by the processor or the controller, the functions/operations specified in the flowchart and/or the block diagram are implemented. The program code may be completely executed on a machine, partially executed on a machine, partially executed on a machine as a stand-alone software package and partially executed on a remote machine, or completely executed on a remote machine or a server.

In the context of the present disclosure, a machine-readable medium or a computer-readable medium may be a tangible medium that may include or store a program for use by an instruction execution system, apparatus, or device or in combination with an instruction execution system, apparatus, or device. The computer-readable medium may be a machine-readable signal medium or a machine-readable storage medium. The computer-readable medium may include but is not limited to an electronic, magnetic, optical, electromagnetic, infrared, or semiconductor system, apparatus, or device, or any appropriate combination of the foregoing content. A more specific example of the machine-readable storage medium includes an electrical connection based on one or more lines, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination of the foregoing content.

In addition, although operations are described in a particular order, it should be understood as that it is required that the operations are performed in the shown particular order or in sequence, or it is required that all operations shown in the figures should be performed to achieve an expected result. In a specific environment, multi-task and parallel processing may be advantageous. Similarly, although several specific implementation details are included in the foregoing description, these should not be construed as limiting the scope of the present disclosure. Some features described in the context of an individual embodiment may alternatively be implemented in combination in a single implementation. On the contrary, various features described in the context of a single implementation may alternatively be implemented in a plurality of implementations individually or in any appropriate sub-combination.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

## Claims

1. A method for determining a tag of a video, comprising:
constructing, based on text information of a plurality of videos, a keyword library for labeling a video;
determining video information of a to-be-labeled target video, wherein the video information comprises at least text information of the target video;
determining a video feature of the target video based on the text information of the target video; and
determining, based on the video feature, at least one keyword from the keyword library as a tag of the target video.

2. The method according to claim 1, wherein the constructing, based on text information of a plurality of videos, a keyword library for labeling a video comprises:
obtaining the plurality of videos through the internet;
extracting first text information of a first video in the plurality of videos; and
constructing the keyword library based on at least the first text information.

3. The method according to claim 2, wherein the constructing the keyword library based on at least the first text information comprises:
extracting audio information of the first video;
converting the audio information into second text information;
parsing the first text information and the second text information, to determine a segment in the text information; and
constructing the keyword library based on the segment.

4. The method according to claim 3, wherein the constructing the keyword library based on the segment comprises:
extracting a keyword in the segment;
determining a frequency at which each extracted keyword appears in a plurality of keywords of the plurality of videos;
determining a group of initial keywords from the plurality of keywords, wherein the frequency of each keyword in the group of initial keywords is greater than a first threshold frequency and less than a second threshold frequency; and
storing the group of initial keywords in the keyword library.

5. The method according to claim 1, wherein the video information further comprises audio information and image information, and the determining a video feature of the target video comprises:
determining an audio feature of the audio information by using a pre-trained audio model;
determining a text feature of the text information by using a pre-trained text model;
determining an image feature of the image information by using a pre-trained image model; and
fusing the audio feature, the text feature, and the image feature, to determine the video feature.

6. The method according to claim 5, wherein the fusing the audio feature, the text feature, and the image feature, to determine the video feature comprises:
masking the audio feature, the text feature, and the image feature by using a mask module in a pre-trained fusion model, to obtain a masked audio feature, a masked text feature, and a masked image feature, wherein the mask module is configured to identify, from the audio feature, the text feature, and the image feature, a non-correlated feature that does not match the target video; and
fusing the masked audio feature, the masked text feature, and the masked image feature by using the fusion model, to determine the video feature.

7. The method according to claim 1, wherein the determining, based on the video feature, at least one keyword from the keyword library as a tag of the target video comprises:
determining a group of keyword features of a group of keywords by using a pre-trained text model, wherein the group of keywords is a set of keywords in the keyword library; and
determining, based on the video feature and the group of keyword features, at least one keyword from the group of keywords as the tag of the target video.

8. The method according to claim 7, wherein the determining at least one keyword from the group of keywords as the tag of the target video comprises:
mapping the group of keyword features to a group of first keyword features through a first feature mapping layer;
mapping the video feature to a first video feature through a second feature mapping layer, wherein a spatial difference between feature space in which each first keyword feature in the group of first keyword features is located and feature space in which the first video feature is located is less than a spatial difference between feature space in which the keyword feature is located and feature space in which the video feature is located; and
determining, based on the first video feature and the group of first keyword features, at least one keyword that matches the target video as the tag of the target video.

9. The method according to claim 8, wherein the determining the tag of the target video based on the first video feature and the group of first keyword features comprises:
separately mapping the group of first keyword features and the first video feature to a group of second keyword features and a second video feature through a third feature mapping layer, wherein a spatial difference between feature space in which each second keyword feature in the group of second keyword features is located and feature space in which the second video feature is located is less than the spatial difference between the feature space in which the first keyword feature is located and the feature space in which the first video feature is located; and
determining, based on the second video feature and the group of second keyword features, at least one keyword that matches the target video as the tag of the target video.

10. The method according to claim 9, wherein the determining the tag of the target video based on the second video feature and the group of second keyword features comprises:
determining a matching degree between the video feature and a second keyword feature of each keyword in the group of keywords;
determining at least one keyword from the group of keywords, wherein a matching degree between a second keyword feature of the at least one keyword and the video feature is greater than a threshold matching degree; and
determining the at least one keyword as the tag of the target video.

11. The method according to claim 1, further comprising:
updating the keyword library based on the at least one keyword that is used as the tag of the target video.

12. The method according to claim 1, further comprising:
obtaining the target video as a sample video;
obtaining the tag of the target video as a sample tag;
applying the sample video, the sample tag, and the keyword library to a tag model, to determine a predicted tag of the sample video; and
updating a parameter value of the tag model based on an error between the sample tag and the predicted tag.

13. The method according to claim 12, wherein the tag model comprises one or more of an audio model, a text model, an image model, a fusion model, a first feature mapping layer, a second feature mapping layer, and a third feature mapping layer.

14. An apparatus for determining a tag of a video, comprising:
a word library construction module, configured to construct, based on text information of a plurality of videos, a keyword library for labeling a video;
a video information extraction module, configured to determine video information of a to-be-labeled target video, wherein the video information comprises at least text information of the target video;
a target video feature determining module, configured to determine a video feature of the target video based on the text information of the target video; and
a video tag module, configured to determine, based on the video feature, at least one keyword from the keyword library as a tag of the target video.

15. The apparatus according to claim 14, wherein the word library construction module comprises:
a video obtaining module, configured to obtain the plurality of videos through the internet;
a first text extraction module, configured to extract first text information of a first video in the plurality of videos; and
a first word library generation module, configured to construct the keyword library based on at least the first text information and the audio information.

16. The apparatus according to claim 15, wherein the first word library generation module comprises:
a first audio extraction module, configured to extract audio information of the first video;
an audio conversion module, configured to convert the audio information into second text information;
a text parsing module, configured to parse the first text information and the second text information, to determine a segment in the text information; and
a second word library generation module, configured to construct the keyword library based on the segment.

17. The apparatus according to claim 16, wherein the second word library generation module comprises:
a keyword extraction module, configured to extract a keyword in the segment;
a frequency determining module, configured to determine a frequency at which each extracted keyword appears in a plurality of keywords of the plurality of videos;
a keyword screening module, configured to determine a group of initial keywords from the plurality of keywords, wherein the frequency of each keyword in the group of initial keywords is greater than a first threshold frequency and less than a second threshold frequency; and
a keyword storage module, configured to store the group of initial keywords in the keyword library.

18. The apparatus according to claim 14, wherein the video information further comprises audio information and image information, and the target video feature determining module comprises:
an audio feature determining module, configured to determine an audio feature of the audio information by using a pre-trained audio model;
a text feature determining module, configured to determine a text feature of the text information by using a pre-trained text model;
an image feature determining module, configured to determine an image feature of the image information by using a pre-trained image model; and
a first feature fusion module, configured to fuse the audio feature, the text feature, and the image feature, to determine the video feature.

19. The apparatus according to claim 18, wherein the first feature fusion module comprises:
a modal correlation analysis module, configured to mask the audio feature, the text feature, and the image feature by using a mask module in a pre-trained fusion model, to obtain a masked audio feature, a masked text feature, and a masked image feature, wherein the mask module is configured to identify, from the audio feature, the text feature, and the image feature, a non-correlated feature that does not match the target video; and
a second feature fusion module, configured to fuse the masked audio feature, the masked text feature, and the masked image feature by using the fusion model, to determine the video feature.

20. The apparatus according to claim 14, wherein the video tag module comprises:
a keyword feature determining module, configured to determine a group of keyword features of a group of keywords by using a pre-trained text model, wherein the group of keywords is a set of keywords in the keyword library; and
a first tag matching module, configured to determine, based on the video feature and the group of keyword features, at least one keyword from the group of keywords as the tag of the target video.

21. The apparatus according to claim 20, wherein the first tag matching module comprises:
a first feature mapping module, configured to map the group of keyword features to a group of first keyword features through a first feature mapping layer;
a second feature mapping module, configured to map the video feature to a first video feature through a second feature mapping layer, wherein a spatial difference between feature space in which each first keyword feature in the group of first keyword features is located and feature space in which the first video feature is located is less than a spatial difference between feature space in which the keyword feature is located and feature space in which the video feature is located; and
a second tag matching module, configured to determine, based on the first video feature and the group of first keyword features, at least one keyword that matches the target video as the tag of the target video.

22. The apparatus according to claim 21, wherein the second tag matching module comprises:
a third feature mapping module, configured to separately map the group of first keyword features and the first video feature to a group of second keyword features and a second video feature through a third feature mapping layer, wherein a spatial difference between feature space in which each second keyword feature in the group of second keyword features is located and feature space in which the second video feature is located is less than the spatial difference between the feature space in which the first keyword feature is located and the feature space in which the first video feature is located; and
a third tag matching module, configured to determine, based on the second video feature and the group of second keyword features, at least one keyword that matches the target video as the tag of the target video.

23. The apparatus according to claim 22, wherein the third tag matching module comprises:
a matching degree determining module, configured to determine a matching degree between the video feature and a second keyword feature of each keyword in the group of keywords;
a keyword determining module, configured to determine at least one keyword from the group of keywords, wherein a matching degree between a second keyword feature of the at least one keyword and the video feature is greater than a threshold matching degree; and
a tag determining module, configured to determine the at least one keyword as the tag of the target video.

24. The apparatus according to claim 14, further comprising:
a word library update module, configured to update the keyword library based on the at least one keyword that is used as the tag of the target video.

25. The apparatus according to claim 14, further comprising:
a sample video obtaining module, configured to obtain the target video as a sample video;
a sample tag obtaining module, configured to obtain the tag of the target video as a sample tag;
a predicted tag determining module, configured to apply the sample video, the sample tag, and the keyword library to a tag model, to determine a predicted tag of the sample video; and
a tag model training module, configured to update a parameter value of the tag model based on an error between the sample tag and the predicted tag.

26. The apparatus according to claim 25, wherein the tag model comprises one or more of an audio model, a text model, an image model, a fusion model, a first feature mapping layer, a second feature mapping layer, and a third feature mapping layer.

27. An electronic device, comprising:
at least one computing unit; and
at least one memory, wherein the at least one memory is coupled to the at least one computing unit and stores instructions for execution by the at least one computing unit, and when the instructions are executed by the at least one computing unit, the device is enabled to perform the method according to any one of claims 1 to 13.

28. A computer-readable storage medium, wherein the computer-readable storage medium stores a computer program, and when the program is executed by a processor, the method according to any one of claims 1 to 13 is implemented.

29. A computer program product, wherein the computer program product comprises computer-executable instructions, and when the computer-executable instructions are executed by a processor, a computer is enabled to implement the method according to any one of claims 1 to 13.
